# EUROPEAN PATENT APPLICATION

(11) **EP 0 723 347 A1**
(43) Date of publication of application: **24.07.1996**
(21) Application number: 95203596.2
(22) Date of filing: 21.12.1995
(51) Int. Cl.: H04J 14/02, H04J 1/06, H04J 3/06

(54) **Carrier stabilization in a transmission system**

(30) Priority: 23.01.1995 NL 9500113
(71) Applicant: Koninklijke PTT Nederland N.V., NL-2509 CH The Hague (NL)
(72) Inventor: Tan, Han Hiong, NL-2651 VD Berkel en Roodenrijs (NL)

(57) **Abstract**

Transmission system in which a central station transmits a digital signal to local stations. In the local stations, the frequency of the clock signal of the central station is extracted from the received digital signal. Said extracted clock signal is used not only for processing the digital signal locally, but furthermore for generating a carrier wave with which the local station can send signals to the central station. The carrier-wave frequencies of the local stations are thus all derived from one and the same central (clock) frequency. In the time-division sending of data packets, such as ATM cells, to the central station, data packets originating from various locations can thus be combined perfectly with one another without the risk of interference. Because use can thus be successfully made of frequency-division multiplexing, other, non-time-multiplexed signals, such as CATV signals, can be transmitted in said manner simultaneously. Use, in particular, in the passive optical network (PON).

## Description

### A. BACKGROUND OF THE INVENTION

The invention relates to a transmission system in which digital signals are exchanged between transmission stations, in particular, local stations and a central station. In particular, the invention conceives the exchange of TDM (time-division multiplexing) signals in a local passive optical network (PON); however, the invention is not limited thereto. If the network has to transmit not only time-multiplexed signals, such as ATM data cells, but also non-time-multiplexed signals, such as CATV signals, it is tempting to transmit both the time-multiplexed and the non-time-multiplexed signals by means of SCM (subcarrier modulation), or frequency-division multiplexing. The downstream transmission (from the central station to the local stations) of both non-time-multiplexed CATV signals and time-multiplexed signals (TDM packets) using frequency-division multiplexing does not present any particular problems. However, the following problem arises in the upstream transmission of TDM packets by means of frequency-division multiplexing. Since the packets are generated locally and are time-multiplexed at a central point (in the case of a PON, in a passive collection/distribution device, a so-called 'curb'), it is important that the packets are always transmitted at the correct instant (time slot) (which is dealt with by two applications recently filed by the Applicant, in particular NL94.01697 and NL94.01978). In addition (and that is the subject of the present patent application), although they are generated in different local stations, the carrier waves with which the TDM packets are transmitted must have identical frequencies. If the carrier waves are not mutually identical, interferences may, after all, be expected as a consequence of carrier-wave interferences. Moreover, the demodulation in the central station of local signals combined by means of the curb is most efficient with identical carrier-wave frequencies. The present invention provides for the frequencies of the locally generated carrier waves to be mutually identical.

### B. SUMMARY OF THE INVENTION

According to the invention, use is made of the system clock frequency to adjust the carrier-wave frequency in the local stations. Said system clock frequency can be derived from the bits of the downstream signal in any local station. Consequently, in all the local stations, the frequency of the carrier wave of the upstream signal is based on one and the same (central) system clock, as a result of which said local carrier-wave frequencies are mutually identical.

Preferably, the carrier-wave frequency is a factor of 2ⁿ times the system clock frequency. This makes it possible to make use of simple analog frequency multipliers (diode bridges).

If a local station sends out a packet, the carrier wave is modulated with said packet. To prevent mutual influencing of the local signals, if no packet is being transmitted, no carrier wave is transmitted either.

In the curb, the modulated signals originating from the various local stations are (passively) combined and transmitted to the central station, where the combined signal is demodulated, resulting in a stream of TDM packets originating from various local stations. Since the carrier-wave frequencies of all the local stations are identical, the demodulation of said packets can be performed simply and efficiently.

### C. EXEMPLARY EMBODIMENT

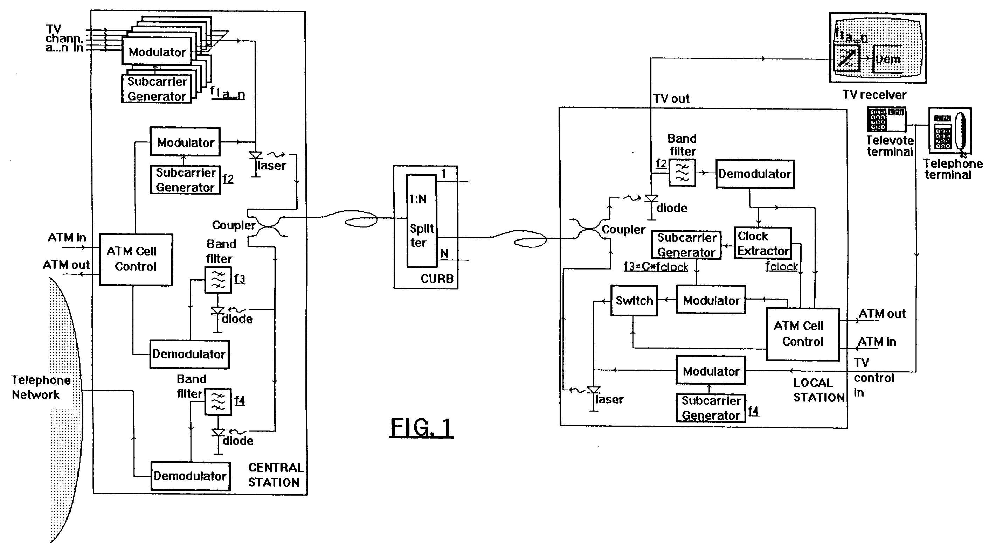

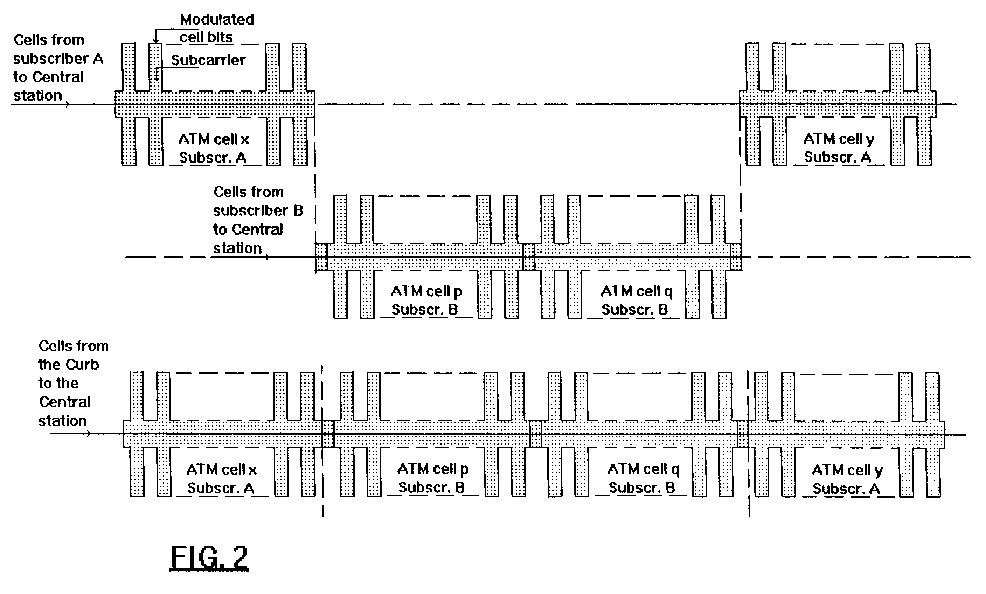

Figure 1 shows an exemplary embodiment of a CATV/ATM transmission system in which the invention is used. Figure 2 shows diagrammatically a number of ATM cells originating from various local stations and modulated onto a subcarrier.

Figure 1 shows a central station, a 'curb' and a local station between which data packets (ATM cells have been taken as an example) can be exchanged via optical fibres. Moreover, CATV signals are distributed via the same system. In the central station, CATV signals modulated onto various subcarrier frequencies f_{1a...n} are presented channel-wise to a transmitting laser. An ATM signal (comprising ATM cells designed for various local stations) is modulated onto a subcarrier frequency f₂ by means of a cell control device and presented to the same transmitting laser. Via a coupler, the signals are transmitted at one and the same (optical) carrier wavelength (of, for example, 1550 nm), but modulated onto various subcarrier frequencies to a curb (distributor), where the signals are passively distributed over various local subscriber stations. In the local stations, the optical signal is converted into an electrical signal by an optical diode via a coupler.

The signal is presented directly to the subscriber TV receiver, where the desired subcarrier frequency (= TV channel) can be selected from f_{1a...n} and demodulated.

The carrier-wave frequency f₂ onto which the ATM cells have been modulated is selected from the signal presented by a (fixed) band-pass filter. Said selected signal is demodulated and then presented to the subscriber via an ATM cell control device.

The precise (system) clock frequency of the ATM cells (at present standardized at 155 MHz) is also derived from the demodulated ATM signal by a clock extractor (as described, for example, in NL93.01026 in the name of the Applicant). In this process, a local clock generator generates a clock signal which is adjusted to, and kept equal to, the clock frequency of the received bits on the basis of the cell bits received from the central station. The clock signal derived in this way is used for the further processing of the cells by means of the cell control device and optional further local devices.

The extracted clock signal also drives a subcarrier generator which multiplies the clock frequency by a factor of 2ⁿ, for example 4, as a result of which, after being modulated by a modulator connected to the subcarrier generator, upstream ATM cells are transmitted at a carrier frequency f₃ of (4*155 =) 620 MHz. The signal modulated in this way is converted into an optical signal having a carrier wavelength of, for example, 1550 nm by a transmitting laser. Inserted between the modulator and the transmitting laser is a switch which is controlled from the cell control device; the switch allows a signal through only if an ATM cell is being transmitted. In the intervening periods, as is also illustrated in Figure 2, no modulation signal at all is excited. This is because it would otherwise influence the "0" level of other local stations.

Figure 1 also illustrates how a second (non-time-multiplexed) signal is sent from the local station to the central station. Said signal may be, for example, a telephone signal or a TV control signal for the purpose of interactive television, as proposed, inter alia, in EP600 567 in the name of the Applicant. With a "televote" device proposed therein, televote signals can be sent to the televote processor in a television studio in response to a question posed in a television program. The telephone signal or televote signal modulates a second carrier-wave signal in a second modulator in the local station. The carrier-wave frequency f₄ is characteristic of the subscriber, in other words, the subscriber identifies himself by his carrier-wave frequency (as is proposed in EP-389 062 in the name of the Applicant). The modulated telephone/televote signal is also converted into a 1550 nm optical signal by means of the transmitting laser.

In the curb, the optical signals of all the connected local stations are passively combined with one another and fed via one fibre to the central station, where the combined optical signal is converted into an electrical signal by an optical diode. The signal is demodulated (by means of a band-pass filter tuned to f₃ (620 MHz)) by a demodulator and further processed by means of the cell control device, already mentioned, of the central station. The operation and further functioning of the cell control device in the central station and the cell control devices in the local stations is not dealt with here; in this connection, reference should be made to, for example, the patent applications NL94.01697 and NL94.01978 mentioned.

The telephone/televote signal is fed to a second demodulator via a band-pass filter tuned to a frequency f₄ and is transmitted further to the telephone network (to which, according to the patent specification mentioned, the televote processor is also connected).

Figure 2 shows diagrammatically modulated ATM cells x and y originating from a local subscriber station A and modulated ATM cells p and q originating from a local subscriber station B. The ATM cells are AM-modulated: "1" bits have an amplitude of "1"; "0" bits have a "0" amplitude (however, other types of modulation can equally well be used). The various local stations always transmit at mutually different time instants (time slots), as a result of which the cells can easily (passively, without manipulations) be combined with one another to form one cell stream. Said combination takes place in the curb, where the fibres of the various local stations are combined with one another. Since the ATM cells to be transmitted are modulated in all the local stations with a subcarrier frequency which is derived from the same clock frequency, the subcarrier frequency of all the ATM cells is identical, regardless of their origin. It is true that the phases will be different because of the different distances between the local stations and the curb. Said phase difference has, however, only an insignificant effect on the operation. The cell stream can be filtered in the central station and demodulated as if it were a cell stream originating from one source modulated onto one carrier-wave frequency. In Figure 2 it can be seen that, whenever a local station is not transmitting an ATM cell, the modulation signal is completely interrupted, namely by the switch shown in Figure 1. This prevents undesirable mutual influencing of the "0" level of the modulation signals of the various local stations.

It is pointed out that the ATM cells mentioned above may equally well be other data packets, for example data cells which are specifically intended for use in PONs, such as "T-PON" cells.

### D. REFERENCES

NL93.01026, NL94.01697 and NL94.01978 in the name of the Applicant, which had not yet been published at the time of the filing of the present application, and also the published patent applications EP-389062 and EP-600567. Insofar as it is of importance, the contents are deemed to form part of the present application.

## Claims

1. Transmission system, in which a first station transmits, under the control of a clock signal generated by a clock generator, a digital signal to one or more second stations via transmission means, characterized in that, in one or more second stations, the frequency of the clock signal is extracted from the received digital signal by extraction means and a carrier-wave generator generates a carrier wave whose frequency is a function of the extracted clock-signal frequency, for which purpose the carrier-wave generator is connected to said extraction means, the second stations being able to transmit a signal with which said carrier wave is modulated by modulation means.

2. Transmission system according to Claim 1, characterized in that the signal transmitted by the first station comprises TDM data packets.

3. Transmission system according to Claim 1, characterized in that the signal to be transmitted by the second stations comprises TDM data packets.

4. Transmission system according to Claim 1, characterized in that the frequency of the carrier wave generated in the second stations is a factor of 2ⁿ times as great as the frequency of the clock signal, where n is a positive integer.

5. Transmission system according to Claim 3, characterized in that, in the transmission of data packets from a second station to the first station, the carrier wave is interrupted if said transmission of data packets is interrupted.

6. Transmission system according to Claim 1, characterized in that, in the first station, the digital signal modulates, by means of modulation means, a carrier wave generated by a carrier-wave generator, which modulated carrier wave is demodulated after transmission to the second stations by demodulation means in said second stations, the frequency (f₂) of the carrier wave generated in the first station differing from the frequency (f₃) of the carrier wave generated in the second stations.

7. Transmission system according to Claim 1, characterized in that the first station is able to transmit, in addition to the digital signal mentioned, one or more further signals with which further carrier waves are modulated whose frequency (f_{1a...n}) differs from those of the other carrier waves.

8. Transmission system according to Claim 7, characterized in that at least one of the further signals mentioned is a CATV signal.

9. Transmission system according to Claim 1, characterized in that one or more second stations is able to transmit, in addition to the signal mentioned, one or more further signals with which further carrier waves are modulated whose frequency (f₄) differs from those of the other carrier waves.

10. Transmission system according to Claim 9, characterized in that at least one of the further signals mentioned is a telephone signal.

11. Transmission system according to Claim 9, characterized in that at least one of the further signals mentioned is a control signal for interactive television.

12. Transmission system according to one or more of the preceding claims, in which the first station is a central station and the second stations are local stations.

13. Transmission system according to Claim 12, wherein the central station is connected to the local stations by means of a passive network which transmits the signals transmitted by the stations without any processing.

14. Transmission system according to Claim 13, wherein the passive network is an optical network.

15. Transmission station for the reception, from another transmission station via transmission means, of a digital signal transmitted by said other transmission station under the control of a clock signal, characterized by extraction means for extracting the frequency of the clock signal mentioned from the received digital signal, and also by a carrier-wave generator for generating a carrier wave whose frequency is a function of the extracted clock-signal frequency, for which purpose the carrier-wave generator is connected to said extraction means, and also by modulation means for modulating said carrier wave with a signal destined for the other transmission station mentioned or further transmission stations.
